# EUROPÄISCHE PATENTANMELDUNG

(11) **EP 1 191 355 A2**
(43) Veröffentlichungstag der Anmeldung: **27.03.2002**
(21) Anmeldenummer: 01120431.0
(22) Anmeldetag: 27.08.2001
(51) Int. Cl.: G01W 1/10

(54) **Wetterstation**

(30) Priorität: 26.09.2000 DE 10047609
(71) Anmelder: SIEMENS AKTIENGESELLSCHAFT, 80333 München (DE)
(72) Erfinder: Bäse, Gero, 81371 München (DE); Berner, Georg, 85591 Vaterstetten (DE); Fischer, Andre, 10965 Berlin (DE); Gebler, Martin, 82049 Pulach im Isartal (DE); Moritz, Peter, 85540 Haar (DE); Markgraf, Sabine, 82131 Gauting (DE); Prange, Stefan, Dr., 81476 München (DE); Schlossnikel, Annette, 81245 München (DE); Sibila, Arnd, 82272 Moorenweis (DE); von Brockdorff, Christian, 82272 Moorenweis (DE); Wilde, Jürgen, 82024 Taufkirchen (DE)

(57) **Zusammenfassung**

Die Erfindung ermöglicht eine einfache, effiziente, kostengünstige Erfassung von Umweltdaten dadurch, daß die Erfassung mit einer räumlich mit einer Basisstation eines Mobilfunknetzes integrierten Umweltdatenerfassungsvorrichtung erfolgt.

## Beschreibung

Die Erfindung betrifft Verfahren und Vorrichtungen zur Generierung von Umweltdaten.

Aufgabe der Erfindung ist eine einfache, effiziente, kostengünstige Erfassung von die Umwelt einer Vorrichtung betreffenden Daten (= im folgenden als Umweltdaten bezeichnet). Die Aufgabe wird jeweils durch die Gegenstände der unabhängigen Ansprüche gelöst.

Die Erfindung ermöglicht eine Erfassung von ortsabhängigen (an mehreren Orten unterschiedlichen) Umweltdaten mit einer maximalen Erfassungsdichte der Umweltdaten in der Größenordnung der Basisstationsdichte eines beliebigen Mobilfunknetzeswie z.B. eines GSM- oder UMTS- Mobilfunknetzes.

Erfindungsgemäß erfolgt hierfür eine Integration von Sensoren zur Erfassung von Umweltdaten in eine Basisstation eines Telekommunikationsnetzes. Umweltdaten sind beliebige, die Umwelt einer sie erfassenden Vorrichtung betreffende Daten, insbesondere Wetterdaten, Polleninformationen, Luftverschmutzungsdaten usw. Eine Umweltdatenerfassungvorrichtung kann Sensoren insbesondere für den Luftdruck und/oder die Temperatur und/oder Pollendichten und/oder den UV - Index und/oder Ozonkonzentrationen und/oder die Windstärke beinhalten. Hierfür können unterschiedlichste bekannte Sensoren verwendet werden, z.B. auch Kameras.
Eine erfindungsgemäße, räumlich und/ oder funktionell integrierte Anordnung einer Umweltdatenerfassungsvorrichtung in oder (angeschlossen) an einer Basisstation (Base station), insbesondere der Anschluß an deren Anschluß- Infrastruktur kann insbesondere insofern vorteilhaft sein, als in einer Basisstation u.a. Stromversorgung und Datenleitungen bereits vorhanden sind und Bebauungsrechte (auf Gebäuden, Brücken etc) bereits für den Aufbau der Basisstation zwischen einem Mobilfunknetz- Betreiber und einem Gebäudeeigentümer etc. geklärt sind.

Die Erfindung ermöglicht einfach und effizient eine ortsabhängige Generierung von direkt oder überarbeitet vertreibbaren unterschiedlichsten Umweltdaten (=Location dependent content production) durch Basisstation(en). Die erzeugten Umweltdaten (enviromental data) stehen dem Betreiber eines Mobilfunknetzes (und dessen Basisstationen) unmittelbar weiterverwendbar zur Verfügung.
Das engmaschige Netzwerk von Basisstationen (BS) eines Mobiltelekommunikationsnetzes ermöglicht eine engmaschige Umweltdatenerfassung im Gebiet eines Mobiltelekommunikationsnetzes.
Die Umweltdaten können als Content unmittelbar oder weiterverarbeitet (intelligent content processing) inbesondere vom Mobilfunknetz- Service Provider weiterübermittelt werden. Die Weiterübermittlung an Endgeräte kann insbesondere als Rundspruch (forecast) an alle oder einige Teilnehmer in Mobilfunkzellen oder Mobilfunkzellengruppen, oder Point- to-point an Mobilfunkteilnehmer oder an Content- Service- Provider zur Weitervermittlung durch letztere an Endgeräte (von Content- Abnehmern) erfolgen.
Vorteilhaft ist insbesondere das Angebot eines Push services gemäß eines Kundenprofiles für Content- Abnehmer (insb. Mobilfunkteilnehmer mit Mobilfunkendgeräten).

Weitere Merkmale und Vorteile der Erfindung ergeben sich aus der nachfolgenden Beschreibung eines Ausführungsbeispieles anhand der Zeichnung. Dabei zeigt:

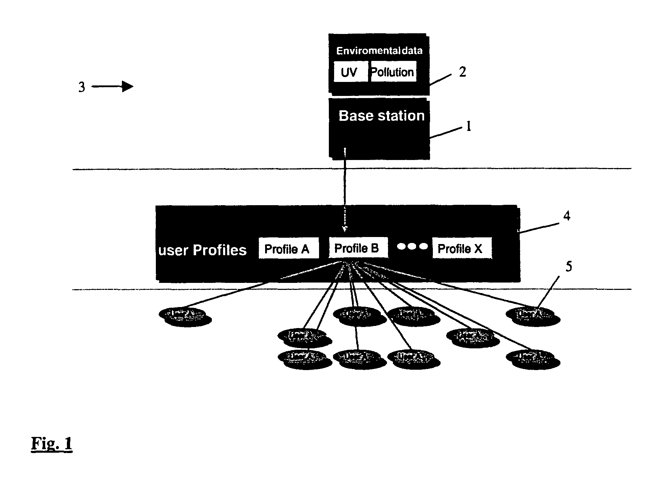

- Fig 1: schematisch eine erfindungsgemäße Umweltdatenerfassung.

Figur 1 zeigt eine in einer Basisstation (Base Station) 1 eines Mobilfunknetzes 3 angeordnete Wetterstation (Weather Station), mit deren Sensoren 2 (hier beispielhaft UV- Sensoren und Pollution-Sensoren= Luftverschmutzungssensoren) Umweltdaten erfasst werden. Diese Umweltdaten werden an einen Service- Provider 4, z.B. den Provider des Mobilfunknetzes (in dessen Basisstationen sich die Sensoren befinden) oder einen von diesem mit Daten belieferten weiteren Serviceprovider übermittelt. Dieser übermittelt an Mobilfunkendegeräte 5 ("User A" in Figur 1) oder andere Endgeräte von Empfängern (hier zeitlich etc gemäß deren Kundenprofil "Profile A" oder "Profile B" oder "Profile X") Umweltdaten oder daraus erzeugte Daten per Mobilfunk oder Festnetz oder Internet (z.B. per html, wml, xml, etc) auf deren Anfrage hin (=Pull) oder ohne Anfrage (push, zB zu im Kundenprofil eines Endgerät- Benutzers vorgegebenen Zeiten etc).
Die Übertragung an Endgeräte kann point to point (z.B. per SMS-PtP) oder als Rundspruch (z.B. als Cellbroadcast, SMS-CB etc) erfolgen.

## Patentansprüche

1. Verfahren zur Erfassung von Umweltdaten,
**dadurch gekennzeichnet, daß**
die Erfassung mit einer räumlich mit einer Basisstation eines Mobilfunknetzes integrierten Umweltdatenerfassungsvorrichtung erfolgt.

2. Verfahren nach Anspruch 1
**dadurch gekennzeichnet, daß**
die Umweltdatenerfassungsvorrichtung zumindest teilweise innerhalb einer Basisstation angeordnet ist.

3. Verfahren nach einem der vorhergehenden Ansprüche,
**dadurch gekennzeichnet, daß**
die Umweltdatenerfassungsvorrichtung integrierte oder an sie über Leitungen oder Funk angeschlossene Sensoren zur Messung von Luftverschmutzungsdaten und / oder Polleninformationen und / oder Wetterdaten, insbesondere Luftdruck und/oder Temperatur und/oder Pollen und/oder UV - Index und/oder Windstärke verwendet.

4. Verfahren nach einem der vorhergehenden Ansprüche,
**dadurch gekennzeichnet, daß**
die Umweltdatenerfassungsvorrichtung oder ihre Sensoren über eine leitungsbasierte oder funkbasierte Schnittstelle Daten an die Basisstation übermitteln.

5. Verfahren nach einem der vorhergehenden Ansprüche,
**dadurch gekennzeichnet, daß**
erfaßte Umweltdaten an einen ausserhalb der Mobilstation befindlichen Rechner des Betreibers des Mobilfunknetzes weiter übermittelt werden.

6. Verfahren nach einem der vorhergehenden Ansprüche,
**dadurch gekennzeichnet, daß**
erfaßte Umweltdaten unmittelbar oder nach Weiterverarbeitung,- insbesondere gemäß eines Kundenprofiles mindestens eines Mobilfunkteilnehmers-, an einen oder mehrere Mobilfunkteilnehmer Point- to- Point oder als Broadcast ausgesendet werden.

7. Vorrichtung,- insbesondere zur Durchführung des Verfahrens nach einem der vorhergehenden Ansprüche-,
zur Erfassung von die Umwelt der Vorrichtung betreffenden Daten,
-mit Sensoren zur Erfassung dieser Daten und
―mit Schnittstellen zur Übergabe dieser Daten in eine Basisstation eines Mobiltelekommunikationsnetzes, in oder an welcher die Vorrichtung anzuordnen ist.

8. Vorrichtung nach Anspruch 7,
**dadurch gekennzeichnet, daß**
sie für den räumlich integrierten Einbau in oder Anschluß an eine Basisstation ausgebildet ist.

9. Vorrichtung nach Anspruch 7 oder 8,
**dadurch gekennzeichnet, daß**
die sie Sensoren für Luftverschmutzungsdaten und / oder Polleninformationen und / oder Wetterdaten, insbesondere Luftdruck und/oder Temperatur und/oder Pollen und/oder UV - Index und/oder Windstärke aufweist.

10. Vorrichtung nach einem der Ansprüche 7-9,
**dadurch gekennzeichnet, daß**
die sie oder ihre Sensoren an die Stromversorgung der Basisstation und / oder an Datenleitungen von und/oder zu der Basisstation angeschlossen sind.

11. Basisstation für ein Mobiltelekommunikationsnetz,
insbesondere zur Durchführung des Verfahrens nach einem der Ansprüche 1-6, mit einer Umweltdatenerfassungsvorrichtung nach einem der Ansprüche 7-10.
